# NEUE EUROPÄISCHE PATENTSCHRIFT

(11) **EP 2 115 043 B2**
(45) Veröffentlichungstag und Bekanntmachung des Hinweises auf die Entscheidung über den Einspruch: **18.08.2021**
(45) Hinweis auf die Patenterteilung: 31.05.2017
(21) Anmeldenummer: 08735040.1
(22) Anmeldetag: 04.04.2008
(51) Int. Cl.: C08J 3/14, B29C 67/00, C08J 3/12

(54) **PAEK-PULVER, INSBESONDERE ZUR VERWENDUNG IN EINEM VERFAHREN ZUM SCHICHTWEISEN HERSTELLEN EINES DREIDIMENSIONALEN OBJEKTES, SOWIE VERFAHREN ZU DESSEN HERSTELLUNG**
PAEK POWDER, PARTICULARLY FOR USE IN A METHOD FOR THE PRODUCTION OF A THREE-DIMENSIONAL OBJECT IN LAYERS, AND METHOD FOR THE PRODUCTION THEREOF
POUDRE DE PAEC, DESTINÉE À ÊTRE UTILISÉE EN PARTICULIER DANS UN PROCÉDÉ DE FABRICATION PAR COUCHES D'UN OBJET TRIDIMENSIONNEL ET PROCÉDÉ DE FABRICATION DUDIT OBJET

(30) Priorität: 05.04.2007 DE 102007016656
(43) Veröffentlichungstag der Anmeldung: 11.11.2009
(73) Patentinhaber: EOS GmbH Electro Optical Systems, 82152 Krailling (DE)
(72) Erfinder: MÜLLER, Frank, 82256 Fürstenfeldbruck (DE); PFISTER, Andreas, 81475 München (DE); LEUTERER, Martin, 82140 Olching (DE)
(74) Vertreter: Prüfer & Partner mbB Patentanwälte · Rechtsanwälte
(86) Internationale Anmeldenummer: PCT/EP2008/002718
(87) Internationale Veröffentlichungsnummer: WO 2008/122426

(56) Entgegenhaltungen:
- EP-A- 1 674 497
- WO-A-2005/090448

## Beschreibung

Die vorliegende Erfindung betrifft ein Verfahren zur Herstellung eines Polyaryletherketon (PAEK)-Pulver, welches sich speziell für die Anwendung in einem Rapid Prototyping-Verfahren eignet.

WO 2005/090448 A1 beschreibt Pulver für die Verwendung bei der Herstellung von räumlichen Strukturen mittels Schicht aufbauender Verfahren. Die Pulver haben die Besonderheit, dass sie einerseits über ein gutes Fließverhalten verfügen und gleichzeitig so beschaffen sind, dass der mit dem Pulver im Rapid Prototyping hergestellte Formkörper erheblich verbesserte mechanische und/oder thermische Eigenschaften hat. Das Pulver hat einen ersten Anteil, der in Form von sphärischen Pulverteilchen vorliegt und zumindest einen weiteren Anteil in Form von versteifenden und/oder verstärkenden Fasern. Hinweise auf die Viskosität des Pulvers, die Schüttdichte und die Rieselfähigkeit werden nicht gegeben.

EP 1 674 497 A1 beschreibt ein PAEK aufweisendes Pulver sowie die Verwendung dieses Pulvers in Verfahren, bei denen schichtweise durch selektives Aufschmelzen und Verfestigen die gewünschten Strukturen hergestellt werden. Zur Verbesserung der Rieselfähigkeit der Pulver wird den Pulvern eine Rieselhilfe hinzugefügt.

Als Rapid Prototyping-Verfahren werden Verfahren bezeichnet, mit denen eine schnelle Herstellung von Musterbauteilen ausgehend von Konstruktionsdaten möglich ist. Das herzustellende Bauteil wird dabei in der Regel schichtweise aus einem formlosen oder formneutralen Material aufgebaut. Für pulverförmiges Ausgangsmaterial sind solche Verfahren beispielsweise unter den Bezeichnungen 3D-Lasersintern, 3D-Laserschmelzen oder 3D-Drucken bekannt. Als Werkstoffe kommen hierbei Metalle, Keramiken und nicht zuletzt Kunststoffe zum Einsatz. Beispielsweise beschreibt US 5,730,925 ein Lasersinterverfahren, bei dem Schichten eines Pulvers auf einen höhenverfahrbaren Träger aufgetragen werden und selektiv an dem Querschnitt des herzustellenden Objektes entsprechenden Stellen mittels eines Lasers versintert werden.

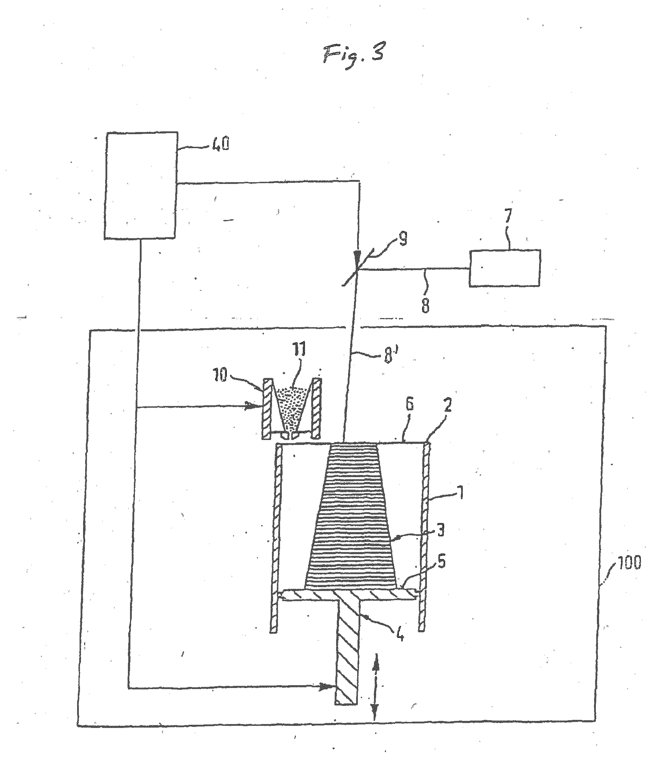

Fig. 3 zeigt beispielhaft eine Lasersintervorrichtung, anhand derer ein Verfahren zur schichtweisen Herstellung eines dreidimensionalen Objektes durchgeführt werden kann. Wie aus Fig. 3 ersichtlich ist, weist die Vorrichtung einen Behälter 1 auf. Dieser ist nach oben offen und nach unten durch einen Träger 4 zum Tragen eines zu bildenden Objektes 3 begrenzet. Durch den oberen Rand 2 des Behälters (bzw. seiner Seitenwände) wird eine Arbeitsebene 6 definiert. Das Objekt befindet sich auf der Oberseite des Trägers 4 und wird aus einer Mehrzahl sich parallel zu der Oberseite des Trägers 4 erstreckender Schichten aus einem mittels elektromagnetischer Strahlung verfestigbaren, pulverförmigen Aufbaumaterial gebildet. Der Träger ist dabei über eine Höheneinstellvorrichtung in vertikaler Richtung, d.h. parallel zu der Seitenwand des Behälters 1 verschiebbar. Damit kann die Position des Trägers 4 relativ zur Arbeitsebene 6 eingestellt werden.

Oberhalb des Behälters 1 bzw. der Arbeitsebene 6 ist eine Aufbringvorrichtung 10 zum Aufbringen des zu verfestigenden Pulvermaterials 11 auf die Trägeroberfläche 5 oder eine zuletzt verfestigte Schicht vorgesehen. Weiterhin ist oberhalb der Arbeitsebene 6 eine Bestrahlungseinrichtung in Form eines Lasers 7 angeordnet, die einen gerichteten Lichtstrahl 8 abgibt. Dieser wird über eine Ablenkeinrichtung 9, beispielsweise einen Drehspiegel, als abgelenkter Strahl 8' in Richtung der Arbeitsebene 6 gelenkt.

Bei der Herstellung des dreidimensionalen Objektes 3 wird das Pulvermaterial 11 schichtweise auf den Träger 4 bzw. eine zuvor verfestigte Schicht aufgetragen und mit dem Laserstrahl 8' an den dem Objekt entsprechenden Stellen einer jeden Pulverschicht verfestigt. Der Träger wird nach jeder selektiven Verfestigung einer Schicht um die Dicke der als nächstes aufzutragenden Pulverschicht abgesenkt.

Das Pulverausgangsmaterial wird in seinen Eigenschaften abhängig von den angestrebten Eigenschaften des herzustellenden Bauteils gewählt. Von großer Bedeutung sind allerdings im Regelfall eine hohe Schüttdichte sowie eine ausreichende Rieselfähigkeit. Zur Gewährleistung einer hohen Detailgenauigkeit und Oberflächengüte der herzustellenden Objekte sind Kunststoffpulver notwendig, die eine Kornobergrenze von weniger als 150µm und einen 90%-Anteil unter 135µm (D_{0.9}-Wert) besitzen. Desweiteren sollte das Pulver zur Sicherstellung eines stabilen Schichtauftrags einen D_{0.1}-Wert von 32µm nicht überschreiten. Ebenso ist eine sphärische Kornform der Pulverpartikel zur Gewährleistung einer gleichmäßigen und glatten Pulverbett-und Bauteiloberfläche unabdingbar. Außerdem ist eine geringe Oberflächenrauigkeit der Partikel, ausgedrückt als BET-Oberfläche, anzustreben, da sich dadurch die Pulverbettdichte erhöht und Auf- und Abbauvorgänge, die die Verarbeitbarkeit des Pulvers negativ beeinflussen, reduziert werden.

Unter den Kunststoffpulvern sind vor allem Polyaryletherketone von Interesse. Dies liegt daran, dass aus PAEK-Pulver oder - Granulaten hergestellte Bauteile sich durch eine schwere Entflammbarkeit, eine gute Biokompatibilität sowie eine hohe Hydrolyse- und Strahlenbeständigkeit auszeichnen. Insbesondere die thermische Beständigkeit auch bei erhöhten Temperaturen sowie die chemische Beständigkeit zeichnen PAEK-Pulver gegenüber herkömmlichen Kunststoffpulvern aus. Aufgrund dieser Eigenschaften sind PAEK-Werkstoffe vor allem in der Luft- und Raumfahrt, in der Automobil- und Elektronikindustrie sowie der Medizinindustrie begehrt. Insbesondere kann es sich bei solch einem PAEK-Polymerpulver um ein Pulver aus der Gruppe Polyetheretherketon (PEEK), Polyetherketonketon (PEKK), Polyetherketon (PEK), Polyetheretherketonketon (PEEKK) oder Polyetherketonetherketonketon (PEKEKK) handeln.

Das große Potential des Werkstoffes PAEK in Verbindung mit einem generativen Rapid Prototyping-Verfahren, beispielsweise dem Lasersintern, ist daher ersichtlich. Allerdings ergaben Versuche der Erfinder mit PAEK-Pulvern, wie sie in konventionellen Verfahren zur Herstellung von Bauteilen verwendet werden, dass sich diese Pulver für das Lasersintern nur eingeschränkt eignen, da die oben genannten Anforderungen an die Pulvereigenschaften nicht erfüllt werden:
Insbesondere über bereits belichteten Flächen zeigte sich, dass der Schichtauftrag an Gleichmäßigkeit zu wünschen übrig ließ und die Unebenheit einer aufgetragenen Schicht die Genauigkeit bei der Herstellung der Bauteile beeinträchtigte. Als Ursache wurden eine unzureichende Rieselfähigkeit sowie eine zu geringe Schüttdichte des Pulvers ausgemacht.

Weiterhin wurde festgestellt, dass die Pulverbettdichte in der aufgetragenen Pulverschicht sehr niedrig war. Dies wurde als Hinweis darauf angesehen, dass die Schüttdichte der Partikel des kommerziell erhältlichen Pulvers nicht hoch genug war. Eine geringe Pulverbettdichte verhindert jedoch die Ausbildung von Bauteilen mit hoher Dichte und Festigkeit.

Angesichts der Nachteile der bisher erhältlichen PAEK-Pulver ist es eine Aufgabe der Erfindung, ein Verfahren zur Herstellung eines PAEK-Pulver bereitzustellen, das sich insbesondere für ein generatives Verfahren der 3D-Herstellung von Bauteilen eignet. Das verbesserte PAEK-Pulver soll dabei insbesondere in einem Lasersinterverfahren eingesetzt werden können.

Die Aufgabe wird gelöst durch ein Verfahren zur Herstellung eines Polyaryletherketon (PAEK)-Feinpulvers nach Anspruch 1.

Weiterbildungen der Erfindung sind in den Unteransprüchen beschrieben.

Von den Figuren zeigen:
Fig. 1 eine REM-Aufnahme von PEEK-Pulver (Schmelzviskosität 0,15kN*s/m², Ausgangspulver für Beispiel 2) vor der erfindungsgemäßen Behandlung,
Fig. 2 eine REM-Aufnahme von PEEK-Pulver (Schmelzviskosität 0,15kN*s/m², gemäß Beispiel 2 für 15 Stunden bei 250°C behandelt) nach der erfindungsgemäßen Behandlung,
Fig. 3 eine Lasersintervorrichtung zur schichtweisen Herstellung eines dreidimensionalen Objektes und
Fig. 4 ein Diagramm, das die Steigerung der Schüttdichte in Abhängigkeit von der Temperzeit bei konstanter Temperatur zeigt (PEEK Pulver mit Schmelzviskosität 0,15kN*s/m², getempert bei 250°C nach Ausführungsbeispiel 2).

Um kommerziell erhältliches PAEK-Pulver so aufzubereiten, dass es sich insbesondere für ein Rapid Prototyping-Verfahren eignet, wurden von den Erfindern umfangreiche Versuchsreihen durchgeführt. Dabei wurde gefunden, dass sich die Schüttdichte des Pulvers dadurch erhöhen lässt, dass vor dem Einsatz des Pulvers als Baumaterial eine Temperbehandlung des Pulvers durchgeführt wird. Ebenfalls konnte eine Verbesserung der Rieselfähigkeit nachgewiesen werden.

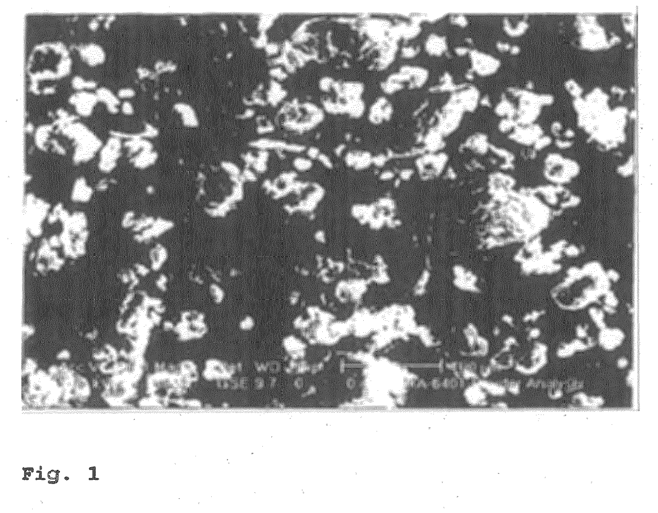

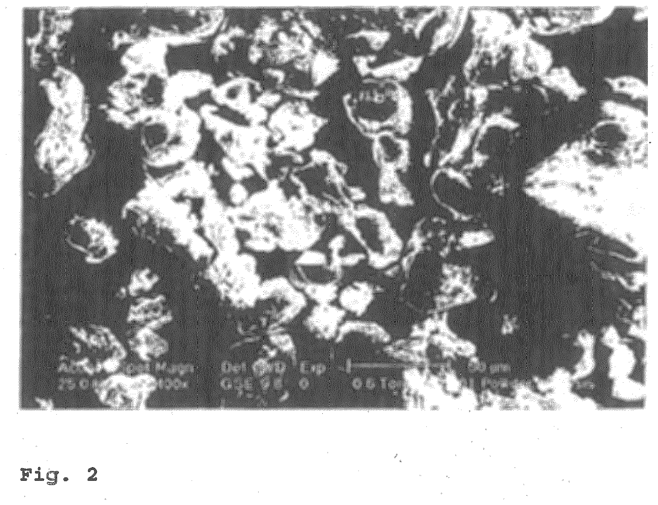

Desweiteren wurde überraschend festgestellt, dass durch die thermische Behandlung der Feinpulver auch eine Verringerung der spezifischen Oberfläche, charakterisiert durch die BET-Oberfläche, eintritt. Eine niedrige BET-Oberfläche ist insofern für das Rapid Prototyping von Vorteil, als dadurch die Reaktionsneigung und Alterung des Pulvers herabgesetzt werden. Wie anhand der rasterelektronenmikroskopischen Aufnahmen von Fig. 1 und 2 zu sehen ist, findet eine Glättung der Pulveroberfläche statt. Die erzielbaren BET-Werte liegen zwischen i und 40 m²/g. Es sollten sogar Werte bis hinunter, zu 0,1 m²/g erreichbar sein.

PAEK-Feinpulver, das kommerziell erhältlich ist, weist typischerweise einen D_{0.9}-Wert von unter 150 µm auf. Es wird aus einem porösen Grobpulver mittels eines kryogenen Mahlverfahrens hergestellt, bei dem das Material während des Vermahlens mit Hilfe von flüssigem Stickstoff gekühlt wird. Alternativ dazu kann das Pulver durch einen Fällprozess aus einem Lösungsmittel, Schmelzsprühen oder Sprühtrocknung hergestellt worden sein. Beispiele für kommerziell erhältliche Pulver sind z.B. PEEK(Polyetheretherketon)-Pulver der Reihen PF, XF und der Vicote-Serie der Firma Victrex Plc, Thornton Cleveleys, Lancashire FY5 4QD, Großbritannien.

Die Tempertemperatur sollte zwischen der Glasübergangstemperatur und dem Schmelzpunkt des Materials gewählt werden. Deutliche Effekte ergeben sich dabei bereits, wenn die Temperatur für mehr als 30 Minuten, besser noch mehr als 1 Stunde, bei 20°C oberhalb der Glasübergangstemperatur gehalten wird. Für PEEK-Pulver liegt dieser Wert bei ca. 170 °C. Obwohl diese Temperparameter für die Erzielung einer Verbesserung der Schüttdichte bereits ausreichend sind, kann mittels einfach durchzuführender Versuchsreihen das Ergebnis für ein bestimmtes Pulvermaterial optimiert werden. Die zu beachtenden Zusammenhänge sind dabei im Folgenden anhand von Versuchsbeispielen beschrieben:

Schmelzpunkt und Glasübergangstemperatur der Polymerpulver wurden mittels Differentialscanningkalorimetrie (DSC) nach DIN 53765 mit einem DSC823 der Firma Mattler-Toledo mit Stickstoff als Spülgas sowie einer Heizrate von 20K/min bestimmt. Die Auswertung der Schmelzenthalpie, Schmelzpunkte und Glasübergangstemperatur erfolgte mittels der STARe Software Version 9.01. Die Integration der Schmelzpeaks der 1.Aufheizkurve liefert dabei die Schmelzenthalpie. Über eine in der Fachliteratur beschriebene Schmelzenthalpie von 130J/g für ein theoretisch 100% kristallines Polyetheretherketon lässt sich die Kristallinität berechnen. Diese Vorgehensweise bei der Auswertung der DSC-Kurven ist dem Fachmann bekannt.

Die Schmelzviskosität wurde mit einem Kapillarviskosimeter bei 400°C und 1000s⁻¹ nach der Prüfvorschrift TM-VX-12 der Firma Victrex plc bestimmt.

### Beispiel 1:

Jeweils 250g eines von Victrex gelieferten PEEK-Pulvers mit einer Schmelzviskosität von 0,15 kN*s/m² (Schüttdichte = 0,401g/cm3) werden in je einem 1000ml Becherglas in einem Umluftofen (Typ Nabertherm N250/A) für die in Tabelle 1 angegebene Zeit und Dauer getempert. Die Aufheizzeit auf die Tempertemperatur beträgt eine Stunde. Nach dem Tempern werden die Bechergläser aus dem Ofen genommen, an Raumtemperatur abgekühlt und die Schüttdichte ermittelt. Die erzielte Steigerung der Schüttdichte liegt zwischen 2% und 17%.

**Tabelle 1:**

| | Zeit [h] | 130°C Tempertemperatur Schüttdichte [g/cm3] | 200°C Tempertemperatur Schüttdichte [g/cm3] | 230°C Tempertemperatur Schüttdichte [g/cm3] | 250°C Tempertemperatur Schüttdichte [g/cm3] |
|---|---|---|---|---|---|
| | 0 | 0,401 | 0,401 | 0,401 | 0,401 |
| PEEK 150PF (250g im 1000ml Becherglas getempert) | 2 | 0,41 | - | - | - |
| | 4 | 0,41 | - | - | - |
| | 6 | 0,41 | - | 0.45 | - |
| | 8 | 0,41 | 0,46 | 0,45 | - |
| | 10 | 0,41 | 0,45 | 0,45 | - |
| | 12 | 0,42 | 0,46 | 0,45 | - |
| | 14 | 0,42 | 0,46 | 0,45 | - |
| | 15 | - | - | - | 0,47 |
| | 16 | - | 0,46 | 0,45 | - |
| | 18 | - | 0,45 | 0,45 | - |
| | 20 | - | - | 0,45 | - |
| | 24 | 0,42 | - | 0,45 | - |

### Beispiel 2:

Jeweils 7kg eines von Victrex gelieferten PEEK-Pulvers mit einer Schmelzviskosität von 0,15 kN*s/m² (Schüttdichte = 0,401g/cm3) werden in je einem Metallbehälter in einem Umluftofen (Typ Nabertherm N250/A) für die in der Tabelle 2 angegebene Zeit und Dauer getempert. Die Aufheizzeit auf die Tempertemperatur beträgt eine Stunde. Nach dem Tempern werden die Metallbehälter aus dem Ofen genommen und an Raumtemperatur abgekühlt. Die erzielte Steigerung der Schüttdichte liegt zwischen 5% und 19%.

**Tabelle 2:**

| | Zeit [h] | 250°C Tempertemperatur Schüttdichte [g/cm3] | 260°C Tempertemperatur Schüttdichte [g/cm3] | 270°C Tempertemperatur Schüttdichte [g/cm3] |
|---|---|---|---|---|
| | 0 | 0,401 | | |
| PEEK 150PF (7kg im Metallbehälter getempert) | 2 | 0,422 | | |
| | 4 | 0,422 | | |
| | 6 | 0,435 | | |
| | 8 | 0,439 | | |
| | 10 | 0,445 | | |
| | 15 | 0,454 | 0,462 | |
| | 20 | | 0,453 | |
| | 21 | 0,449 | | |
| | 23 | 0,452 | | |
| | 25 | 0,454 | | |
| | 27 | 0,453 | | |
| | 29 | 0,461 | | |
| | 96 | | | 0,479 |

### Beispiel 3:

Jeweils 250g eines von der Fa. Victrex gelieferten PEEK-Pulvers mit einer Schmelzviskosität von 0,45 kN*s/m² (Schüttdichte = 0,318g/cm3) werden in je einem 1000ml Becherglas in einem Umluftofen (Typ Nabertherm N250/A) für die in Tabelle 3 angegebene Zeit und Dauer getempert. Die Aufheizzeit auf die Tempertemperatur beträgt eine Stunde. Nach dem Tempern werden die Bechergläser aus dem Ofen genommen, an Raumtemperatur abgekühlt und die Schüttdichte ermittelt. Die erzielte Steigerung der Schüttdichte liegt zwischen 4% und 9%.

**Tabelle 3:**

| | Zeit [h] | 310°C Tempertemp eratur Schüttdichte [g/cm3] | 320°C Tempertemp eratur Schüttdichte [g/cm3] |
|---|---|---|---|
| PEEK 450PF (250g im Becherglas getempert) | 0 | 0,318 | 0,318 |
| | 16 | 0,346 | 0,330 |
| | 24 | 0,343 | 0,331 |
| | 47 | 0,347 | - |

### Beispiel 4:

Jeweils 7kg eines von Victrex gelieferten PEEK-Pulvers mit einer Schmelzviskosität von 0,45 kN*s/m² (Schüttdichte = 0,340g/cm3) werden in je einem Metallbehälter in einem Umluftofen (Typ Nabertherm N250/A) für 20 Stunden bei 290°C getempert. Die Aufheizzeit auf die Tempertemperatur beträgt eine Stunde. Nach dem Tempern werden die Metallbehälter aus dem Ofen genommen und an Raumtemperatur abgekühlt. Die ermittelte Schüttdichte beträgt 0,395g/cm3. Die erzielte Steigerung der Schüttdichte liegt bei 16%.

### Beispiel 5:

Jeweils 7kg eines von Victrex gelieferten PEEK-Pulvers mit Schmelzviskosität von 0,09 kN*s/m² (Schüttdichte = 0,42g/cm3) werden in je einem Metallbehälter in einem Umluftofen (Typ Nabertherm N250/A) für 15h bei 250°C getempert. Die Aufheizzeit auf die Tempertemperatur beträgt eine Stunde. Nach dem Tempern werden die Metallbehälter aus dem Ofen genommen und an Raumtemperatur abgekühlt. Die ermittelte Schüttdichte beträgt 0,47g/cm3. Die erzielte Steigerung der Schüttdichte liegt bei 12%.

### Beispiel 6:

Jeweils 250g eines von Victrex gelieferten PEEK-Pulvers mit einer Schmelzviskosität von 0,15 kN*s/m² (Schüttdichte = 0,401g/cm3) werden in je einem 1000ml Becherglas in einem Umluftofen (Typ Nabertherm N250/A) für die in der Tabelle 4 angegebene Zeit und Dauer getempert. Die Aufheizzeit auf die Tempertemperatur beträgt eine Stunde. Nach dem Tempern werden die Bechergläser aus dem Ofen genommen und an Raumtemperatur abgekühlt. Anschließend wird die Schüttdichte und die Schmelzenthalpie bestimmt. Die erzielte Steigerung der Schüttdichte liegt zwischen 10% und 16%. Die erzielte Steigerung der Kristallinität liegt zwischen 13% und 19%.

**Tabelle 4:**

| Material | Tempertemperatur | Temperzeit | Schüttdichte [g/cm3] | Schmelzenthalpie - DSC [J/g] | Kristallinität - DSC [%] |
|---|---|---|---|---|---|
| 150PF | - | - | 0,401 | 60,4 | 46,5 |
| 150PF | 200°C | 12h | 0,448 | | |
| 150PF | 200°C | 24h | 0,448 | 69,0 | 53,1 |
| 150PF | 250°C | 12h | 0,453 | | |
| 150PF | 250°C | 24h | 0,454 | 68,4 | 52,6 |
| 150PF | 300°C | 12h | 0,462 | | |
| 150PF | 300°C | 24h | 0,464 | 71,7 | 55,2 |
| 150PF | 320°C | 12h | 0,446 | | |
| 150PF | 320°C | 24h | 0,443 | 70,7 | 54,4 |

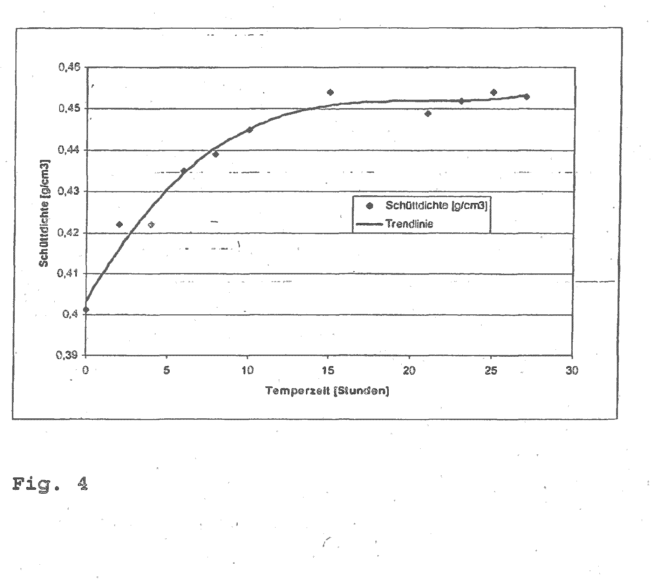

Anhand der obigen Beispielen 1 bis 6 zeigt sich Folgendes:
Bei gegebener Tempertemperatur steigt die Schüttdichte mit zunehmender Behandlungsdauer solange an, bis sie ein nahezu konstantes Niveau erreicht hat (siehe hierzu Tabelle 2 und Fig. 4, anhand derer man für eine Tempertemperatur von 250°C erkennt, dass die Schüttdichte während der ersten 10 Stunden der Behandlung um 0,044 g/cm3 anwächst, während der zweiten 10 Stunden Behandlungsdauer jedoch nur mehr um ca. 0,016 g/cm3.

Desweiteren steigt die Schüttdichte umso schneller an, je höher die Temperatur der thermischen Behandlung ist. Je höher die Temperatur gewählt wird, desto kürzer ist der Zeitraum bis zum Erreichen eines konstanten Niveaus der Schüttdichte (vergleiche hierzu den Verlauf in Tabelle 1 für 130°C mit dem Verlauf in Tabelle 2 für 250°C). Eine noch effizientere Behandlung ist also möglich, wenn die Temperatur höher als 20°C über der Glasübergangstemperatur (ca 143°C für PEEK (Herstellerangabe Victrex)) gewählt wird, beispielsweise ca. 50°C oder ca. 100°C oberhalb der Glasübergangstemperatur.

Desweiteren sieht man anhand des Verlaufs für 130°C in Tabelle 1, dass eine Wahl der Temperatur unterhalb der Glasübergangstemperatur zu einem wenig effizienten Verfahren führt. Ferner erkennt man, dass selbst für diesen Fall bei einer Behandlungsdauer von 2h bereits eine veränderte Schüttdichte vorliegt.

Wichtig ist es, die Temperatur nicht zu nahe am Schmelzpunkt des Pulvers zu wählen. Andernfalls kann ein partielles Verkleben des Pulvers eintreten, was zu einem geringeren Anstieg der Schüttdichte als bei niedrigerer Temperatur führt. Deutlich erkennbar ist dies z.B. anhand von Tabelle 3, wo für 320°C Tempertemperatur geringere Werte der Schüttdichte erreicht werden, wie für 310°C Tempertemperatur. Zur Sicherheit sollte daher die Tempertemperatur 20°C unterhalb des Schmelzpunktes, bestimmt mittels Differentialscanningkalorimetrie (DSC) nach DIN 53765, besser noch 30°C darunter, gewählt werden.

Des Weiteren sind Temperatur und Dauer der thermischen Behandlung auch von der Schmelzviskosität abhängig. Je höher die Schmelzviskosität, desto höher sollte die Temperatur sein, um eine effiziente Steigerung der Schüttdichte zu erreichen. Der Figur 4 kann man hierzu entnehmen, dass für Ausgangspulver mit einer Schmelzviskosität von 0,15 kN*s/m² bei 250°C Tempertemperatur nach 15 Stunden Behandlungsdauer ein Plateauwert für die Schüttdichte erreicht ist. Für das Ausgangspulver mit einer Schmelzviskosität von 0,45 kN*s/m ist bei diesen Temperbedingungen ein Plateauwert noch nicht erreicht. Dies ergibt sich aus dem folgenden Vergleichsbeispiel 4a:
Vergleichsbeispiel 4a:
   Jeweils 7kg eines von Victrex gelieferten PEEK-Pulvers mit einer Schmelzviskosität von 0,45 kN*s/m² (Schüttdichte = 0,340g/cm3) werden in je einem Metallbehälter in einem Umluftofen (Typ Nabertherm N250/A) für 15 Stunden bei 250°C getempert. Die aufheizzeit auf die Tempertemperatur beträgt eine Stunde. Nach dem Tempern werden die Metallbehälter aus dem Ofen genommen und an Raumtemperatur abgekühlt. Die ermittelte Schüttdichte beträgt 0,379g/cm³. Die erzeilte Steigerung der Schüttdichte liegt bei 11%.

Vergleicht man dieses Ergebnis mit jenem von Beispiel 4, wo dasselbe Pulver 20 Stunden bei 290°C getempert wurde, so erkennt man, dass im Beispiel 4a für das Pulver mit Schmelzviskosität 0,45 kN*s/m² noch kein Plateauwert erreicht sein kann, da durch die Bedingungen von Beispiel 4 noch eine deutliche Steigerung der Schüttdichte von 0,379g/cm³ auf 0,395g/cm³ möglich ist.

Ferner kann bei gegebener Dauer und Temperatur der thermischen Behandlung die erreichbare Schüttdichte für größere Pulvermengen etwas niedriger sein. Dies erkennt man anhand eines Vergleichs von Tabelle 1 und 2: Während für T=250°C in Tabelle 1 bei einer Pulvermenge von 250g nach 15 Stunden Behandlungszeit eine Schüttdichte von 0,47 g/cm3 erzielt wurde, wurde in Tabelle 2 für eine Menge von 7kg desselben Pulvers lediglich ein Wert von 0,454 g/cm3 erzielt.

Weiterhin wurde festgestellt, dass durch die thermische Behandlung eine Erhöhung der Kristallinität - bestimmt über die Schmelzenthalpie mittels Differentialscanning-Kalorimetrie (DSC) oder über Weitwinkel-Röntgenstreuung (WAXS) - eintritt. Eine hohe Schmelzenthalpie bzw. Kristallinität ist insbesondere für ein Lasersintern des Pulvers vorteilhaft. Der Grund ist, dass beim Bestrahlen eines Gebietes mittels des Laserstrahls zu dem Gebiet benachbarte Pulverteilchen in Folge der Wärmeleitung des Materials ebenfalls angeschmolzen werden. Eine höhere Schmelzenthalpie bzw. Kristallinität erschwert in diesem Zusammenhang das Anschmelzen der benachbarten Pulverteilchen. Wenn auf diese Weise ein Sintervorgang außerhalb eines gewünschten Bereichs verhindert wird, verbessert sich die Detailauflösung der gesinterten Bauteile.

Der Anstieg der Kristallinität ist beispielsweise der Tabelle 4 entnehmbar.

Obwohl es, wie oben angegeben, für die Effizienz des Verfahrens von Bedeutung ist, eine möglichst hohe Behandlungstemperatur zu wählen, sollte andererseits die Temperatur der thermischen Behandlung bevorzugt so gewählt werden, dass durch eine möglichst niedrige Temperatur und eine möglichst geringe Dauer der thermischen Behandlung eine Verbesserung der Pulverparameter erreicht wird. Der Grund ist, dass eine thermische und oxidative Schädigung des Pulvermaterials während der Temperbehandlung vermieden bzw. auf ein möglichst geringes Ausmaß reduziert werden soll. Um eine Schädigung des Pulvers zu vermeiden und dennoch die Behandlungsdauer des Pulvers kurz zu halten, damit das Verfahren wirtschaftlich ist, kann es daher von Vorteil sein, wenn die thermische Behandlung unter einer Inertgasatmosphäre (z.B. Stickstoff oder Argon) oder unter Vakuum stattfindet.

Obwohl in den obigen Beispielen zur Temperbehandlung ein Ofen benutzt wurde, kann die thermische Energie natürlich auch auf beliebige andere Weisen dem Pulver zugeführt werden. Beispielsweise kann das Pulver elektromagnetischer Strahlung oder Teilchenstrahlung ausgesetzt werden. Insbesondere kann dabei IR-Strahlung oder Mikrowellenstrahlung eingesetzt werden.

Wie das nachfolgende Beispiel 7 zeigt, kann eine Temperaturerhöhung auch durch mechanische Einwirkung auf das Pulver erreicht werden. Die Einstellung der Temperatur erfolgt dabei beispielsweise über die Rührerdrehzahl:

### Beispiel 7:

10kg eines von Victrex gelieferten PEEK-Pulvers mit einer Schmelzviskosität von 0,15 kN*s/m² (Schüttdichte = 0,401g/cm3) werden in einem handelsüblichen Mischer durch scherendes Mischen nachbehandelt. Dabei wird die Rührerdrehzahl so eingestellt, daß sich das Pulver innerhalb von 25min auf 150°C erhitzt. Dann wird die Rührerdrehzahl soweit gesenkt, daß die Temperatur über einen weiteren Zeitraum von 25min konstant bei 150°C gehalten wird. Anschließend wird das Pulver durch erneute Erhöhung der Rührerdrehzahl innerhalb von 20min auf 170°C erhitzt. Schließlich wird die Rührerdrehzahl soweit gesenkt, daß die Temperatur über einen weiteren Zeitraum von 60min konstant bei 170°C gehalten wird.
Nach Verlassen des Mischers wird das Pulver mittels einer Siebmaschine (Vibrationssiebmaschine 12110005 der Firma Siebtechnik) durch ein Schutzsieb mit Maschenweite 245µm gesiebt, um evtl. durch das Tempern entstehende Pulververbackungen zu entfernen. Die ermittelte Schüttdichte beträgt 0,48g/cm3. Die erzielte Steigerung der Schüttdichte liegt bei 19,7%.

Eine mechanische Behandlung kann ebenfalls unterstützend zu einer anderweitigen Zufuhr von thermischer Energie zu dem Pulver durchgeführt werden. In diesem Falle lässt sich eine besonders hohe Steigerung der Schüttdichte bereits bei moderater Tempertemperatur und Behandlungsdauer erzielen.

Vorstehend wurde allgemein ein Polyaryletherketon-Feinpulver als zu behandelndes Ausgangsmaterial angegeben. Insbesondere kann es sich bei solch einem Polymerpulver um ein Pulver aus der Gruppe Polyetheretherketon (PEEK), Polyetherketonketon (PEKK), Polyetherketon (PEK), Polyetheretherketonketon (PEEKK) oder Polyetherketonetherketonketon (PEKEKK) handeln.

Desweiteren muss das PAEK-Pulver bei der Behandlung nicht in Reinform vorliegen. Vielmehr können ein oder mehrere Additive hinzugesetzt sein. Als Additiv kommen dabei Füllstoffe wie z.B. Fasern (Carbonfasern, Glasfasern, Kevlarfasern, Kohlenstoff-Nanoröhren (Carbon Nanotubes)...) oder Füllstoffe mit geringem Aspektverhältnis (Glaskugeln, Alugries, etc.) oder mineralische Füllstoffe wie z.B. Titandioxid oder aber Prozeßhilfsmittel (z.B. Rieselhilfsmittel, beispielsweise aus der Aerosil-Reihe (z.B. Aerosil R974, Aerosil 200)), Wärmestabilisatoren, Oxidationsstabilisatoren, Farbpigmente (Ruß, Graphit, etc.)) in Frage. Desweiteren muss der Füllstoff nicht als eigene Pulverkomponente vorhanden sein, sondern kann in das PAEK-Pulver (z.B. mittels Schmelzverbindung) eingearbeitet sein.

Die erfindungsgemäß erhaltenen PAEK-Pulver eignen sich insbesondere für eine Anwendung in einer Lasersintervorichtung, wie sie beispielsweise in Fig. 3 dargestellt ist. Allerdings ist die Anwendung nicht auf eine Lasersintervorrichtung beschränkt. Vielmehr kann Energie auch in Form von anderer elektromagnetischer Strahlung (einschließlich Wärmestrahlung) zugeführt werden. Ferner kann das Pulver bei der Herstellung des dreidimensionalen Objektes auch vollständig aufgeschmolzen werden. Schließlich kann eine Verfestigung des Pulvers auch durch Zusatz eines Bindemittels (3D-Drucken) herbeigeführt werden.

In einer von EOS für Hochtemperaturanwendungen modifizierten Lasersintermaschine des Typs P700 wurde bei einer Bauraumtemperatur von 335°C das Pulver aus Beispiel 2 (getempert bei 250°C für 15 Stunden) im Lasersinterprozeß verarbeitet. Es lassen sich Probenkörpergeometrien mit der Abmessung 150 x 20 x 4 mm (Länge, Breite, Höhe) herstellen, welche eine Bauteildichte von 1,316 g/cm³ aufweisen (ISO 1133). Bei einer von Victrex plc. angegebenen Dichte von 1,30-1,31 g/cm³ für PEEK Spritzgußteile kann somit von einer Dichte der lasergesinterten Bauteile von 100% ausgegangen werden.

Das unbehandelte Pulver aus Beispiel 2 (Schüttdichte=0,401g/cm³) konnte aufgrund mangelnder Rieselfähigkeit und inhomogenem Schichtauftrag nicht zu vergleichbaren Bauteilen verarbeitet werden.

Die Vorbehandlung des PAEK-Pulvers vor der Verwendung als Aufbaumaterial in einer Vorrichtung zur schichtweisen Herstellung eines dreidimensionalen Objektes, beispielsweise einer Lasersintervorrichtung, kann natürlich auch direkt in der Vorrichtung zur schichtweisen Herstellung vorgesehen werden. Hierzu muss lediglich eine geeignete Heizvorrichtung vorgesehen werden, beispielsweise in Gestalt von Heizschlangen um den Pulvervorratsbehälter herum.

Ein Polyaryletherketon (PAEK)-Feinpulver für den Einsatz als Baumaterial in einem Verfahren zur schichtweisen Generierung von dreidimensionalen Objekten, das mittels des erfindungsgemäßen Temperverfahrens erhalten werden kann, weist eine Schmelzviskosität, die unter 0,25 kN*s/m² liegt, einen D_{0,90}-Wert von unter 150µm, eine BET-Fläche unter 40m²/g und eine Schüttdichte, deren Wert bei größer oder gleich 0,42 g/cm² liegt, auf.

Ein weiteres Polyaryletherketon (PAEK)-Feinpulver für den Einsatz als Baumaterial in einem Verfahren zur schichtweisen Generierung von dreidimensionalen Objekten, das mittels des erfindungsgemäßen Temperverfahrens erhalten werden kann, weist eine Schmelzviskosität, die zwischen 0,25 kN*s/m² und 0,50 kN*s/m² liegt, einen D_{0,90}-Wert von unter 150µm, eine BET-Fläche unter 40m²/g und eine Schüttdichte, deren Wert bei größer oder gleich 0,39 g/cm² liegt, auf.

Noch ein weiteres Polyaryletherketon (PAEK)-Feinpulver für den Einsatz als Baumaterial in einem Verfahren zur schichtweisen Generierung von dreidimensionalen Objekten, das mittels des erfindungsgemäßen Temperverfahrens erhalten werden kann, weist eine Schmelzviskosität, die oberhalb von 0,50 kN*s/m² liegt, einen D_{0,90}-Wert von unter 150µm, eine BET-Fläche unter 40m²/g und eine Schüttdichte, deren Wert bei größer oder gleich 0,34 g/cm² liegt, auf.

## Patentansprüche

1. Verfahren zur Herstellung eines Polyaryletherketon (PAEK)-Pulvers für die Verwendung in einem Verfahren zur schichtweisen Herstellung eines dreidimensionalen Bauelementes, bei dem ein PAEK-Feinpulver, hergestellt durch Mahlen, einen Fällprozeß aus einem Lösungsmittel, Schmelzsprühen oder Sprühtrocknung aus einem Grobpulver oder Granulat, das einen d_{0.90}-Wert von kleiner 150µm aufweist, für einen Zeitraum, der größer als 30 Minuten ist, einer Temperatur T ausgesetzt wird, die mindestens 20 Grad oberhalb der Glasübergangstemperatur, bestimmt mittels DSC nach DIN 53765, des Polymers liegt und unterhalb des Schmelzpunkt Ts des Pulvers, bestimmt mittels Differentialscanningkalorimetrie (DSC) nach DIN 53765 liegt.

2. Verfahren nach Anspruch 1, bei dem die Temperatur T mindestens 50°C oberhalb der Glasübergangstemperatur Tg des Pulvers, bestimmt mittels Differentialscanningkalorimetrie (DSC) nach DIN 53765, gewählt wird.

3. Verfahren nach Anspruch 1 oder 2, bei dem die Temperatur T 30°C unterhalb dem Schmelzpunkt Ts des Pulvers, bestimmt mittels Differentialscanningkalorimetrie (DSC) nach DIN 53765, gewählt wird.

4. Verfahren nach einem der Ansprüche 1 bis 3, bei dem das Pulver mittels Beheizens in einem Ofen der Temperatur T ausgesetzt wird.

5. Verfahren nach einem der Ansprüche 1 bis 3, bei dem das Pulver mittels Bestrahlens mit elektromagnetischer Strahlung oder Teilchenstrahlung der Temperatur T ausgesetzt wird.

6. Verfahren nach einem der Ansprüche 1 bis 3, bei dem die thermische Energie zum Erreichen und Halten der Temperatur T dem Pulver teilweise oder vollständig mittels mechanischer Behandlung zugeführt wird.

7. Verfahren nach einem der Ansprüche 4 bis 5, bei dem ein Teil der zugeführten thermischen Energie zum Erreichen und Halten der Temperatur T dem Pulver mittels mechanischer Behandlung zugeführt wird.

8. Verfahren nach einem der Ansprüche 1 bis 7, wobei dem PAEK-Feinpulver als weitere Komponente zumindest ein Additiv zugesetzt ist.

## Claims

1. Method for producing a polyaryletherketone (PAEK) powder for the use in a method for a layer-wise manufacturing of a three-dimensional part, in which a PAEK fine powder, which has been manufactured by grinding, by a precipitation process from a solvent, by melt spraying or by spray drying from a coarse powder or granulate and has a d_{0.90} value smaller than 150µm, is exposed for a period that is longer than 30 minutes to a temperature T that lies at least 20° above the glass transition temperature of the polymer determined by means of DSC according to DIN 53765 and lies below the melting point T_{S} of the powder determined by differential scanning calorimetry (DSC) according to DIN 53765.

2. Method according to claim 1, in which the temperature T is selected to be at least 50°C above the glass transition temperature Tg of the powder determined by means of differential scanning calorimetry (DSC) according to DIN 53765.

3. Method according to claim 1 or 2, in which the temperature T is selected to be 30°C below the melting point Ts of the powder determined by means of differential scanning calorimetry (DSC) according to DIN 53765.

4. Method according to one of claims 1 to 3, in which the powder is exposed to the temperature T by heating it in an oven.

5. Method according to one of claims 1 to 3, in which the powder is exposed to the temperature T by irradiating it with electromagnetic radiation or particle radiation.

6. Method according to one of claims 1 to 3, in which the thermal energy for reaching and maintaining the temperature T is supplied to the powder partially or completely by means of a mechanical treatment.

7. Method according to one of claims 4 to 5, in which a portion of the supplied thermal energy for reaching and keeping the temperature T is supplied to the powder by means of a mechanical treatment.

8. Method according to one of claims 1 to 7, wherein at least one additive is added to the PAEK fine powder as further component.

## Revendications

1. Procédé pour la préparation d'une poudre de polyaryléthercétone (PAEK) destinée à être utilisée dans un procédé de fabrication par couches d'un élément de construction tridimensionnel, dans lequel une poudre fine de PAEK, préparée par broyage, par un procédé de précipitation à partir d'un solvant, par pulvérisation d'une masse fondue ou par séchage par pulvérisation à partir d'une poudre grossière ou d'un granulat, qui présente une valeur d_{0,90} inférieure à 150 µm, qui est soumis(e), pendant une période de temps supérieure à 30 minutes, à une température T, qui est située au moins 20 degrés au-dessus de la température de transition vitreuse, déterminée par DSC selon la norme DIN 53765, du polymère et inférieure au point de fusion T_{f} de la poudre, déterminé par calorimétrie différentielle à balayage (DSC) selon la norme DIN 53765.

2. Procédé selon la revendication 1, dans lequel la température T est choisie au moins 50°C au-dessus de la température de transition vitreuse Tg de la poudre, déterminée par calorimétrie différentielle à balayage (DSC) selon la norme DIN 53765.

3. Procédé selon la revendication 1 ou 2, dans lequel la température T est choisie 30°C sous le point de fusion T_{f} de la poudre, déterminé par calorimétrie différentielle à balayage (DSC) selon la norme DIN 53765.

4. Procédé selon l'une quelconque des revendications 1 à 3, dans lequel la poudre est soumise à la température T par chauffage dans un four.

5. Procédé selon l'une quelconque des revendications 1 à 3, dans lequel la poudre est soumise à la température T par irradiation par un rayonnement électromagnétique ou par un rayonnement particulaire.

6. Procédé selon l'une quelconque des revendications 1 à 3, dans lequel l'énergie thermique pour atteindre et maintenir la température T de la poudre est alimentée partiellement ou complètement au moyen d'un traitement mécanique.

7. Procédé selon l'une quelconque des revendications 4 à 5, dans lequel une partie de l'énergie thermique alimentée pour atteindre et maintenir la température T de la poudre est alimentée au moyen d'un traitement mécanique.

8. Procédé selon l'une quelconque des revendications 1 à 7, la poudre fine de PAEK étant additionnée d'au moins un additif comme autre composant.
